Europäisches Patentamt

(19) European Patent Office

Office européen des brevets

(11) Numéro de publication: **0 305 934**
**A1**

## (12) DEMANDE DE BREVET EUROPEEN

(21) Numéro de dépôt: **88114004.0**

(22) Date de dépôt: **27.08.88**

(51) Int. Cl.⁴: **A61C 13/30**

(30) Priorité: **02.09.87 CH 3364/87**
**22.10.87 CH 4141/87**

(43) Date de publication de la demande:
**08.03.89 Bulletin 89/10**

(84) Etats contractants désignés:
**DE FR IT SE**

(71) Demandeur: **LES FILS D'AUGUSTE MAILLEFER**
**SOCIETE ANONYME A BALLAIGUES**

**CH-1338 Ballaigues(CH)**

(72) Inventeur: **Velvart, Peter, Dr.**
**Studenmätteli Strasse 32e**
**CH-8903 Birmensdorf(CH)**

(74) Mandataire: **Robert, Jean S.**
**51, route du Prieur**
**CH-1257 Landecy (Genève)(CH)**

(54) **Pivot dentaire.**

(57) Le pivot dentaire (1) présente une tige dont la partie apicale (1a) est cylindrique, qui est suivie d'une partie cervicale tronconique (1b) se prolongeant par une tête (1c) adjacente à la partie tronconique (1b). La tête (1c) sert à la reconstitution, en composite ou en amalgame, d'un moignon destiné à recevoir une couronne dentaire. La tête (1c) est de section non circulaire ce qui correspond mieux à la forme d'une dent naturelle que si elle était de forme circulaire, mais nécessite de pouvoir orienter le pivot lorsqu'il est en place dans le canal radiculaire, après préparation endodontique de celui-ci, en fonction de l'arc dentaire. En conséquence, la tige (1a-1b) est entièrement lisse. La partie apicale (1a) est très rétentive alors que la partie cervicale (1b) offre une base robuste à la reconstitution du moignon, prenant un appui solide sur la couronne naturelle.

FIG. 2

## Pivot dentaire

La présente invention a pour objet un pivot dentaire comprenant une tige munie d'une tête.

Cette tête sert à la reconstitution, en composite ou en amalgame, d'un moignon destiné à recevoir une couronne dentaire, alors que la tige du pivot est destinée à être engagée et scellée dans un puits foré dans la racine de la dent naturelle.

La tige des pivots dentaires de ce type connus actuellement est le plus généralement cylindrique ou conique sur toute sa longueur. On connaît également des pivots dont la tige est cylindrique sur sa partie cervicale, c'est-à-dire proche de la couronne, et conique sur sa partie apicale, c'est-à-dire proche de la pointe de la racine.

Tous ces pivots ne sont que mal adaptés à l'anatomie du canal radiculaire, après préparation endodontique de celui-ci.

Le but de la présente invention est de remédier à cet inconvénient en fournissant un pivot dentaire dont la tige soit très rétentive tout en présentant une base solide à la reconstitution.

Ce but est atteint grâce au fait que ladite tige est formée de deux parties, l'une, cervicale, étant au moins en partie tronconique, et l'autre, apicale, étant cylindrique ou tronconique avec une ouverture de cône inférieure ou égale à 3°.

Le dessin représente, à titre d'exemple, deux formes d'exécution de l'objet de l'invention et une variante.

La fig. 1 est une vue en plan, de dessus, d'une première forme d'exécution d'un pivot dentaire.

La fig. 2 en est une vue latérale, prise dans la direction de la flèche II de la fig. 1.

La fig. 3 en est une vue latérale, prise dans la direction de la flèche III de la fig. 1

La fig. 4 est une vue en élévation d'une deuxième forme d'exécution de pivot dentaire.

La fig. 5 en est une vue en bout, de dessus, suivant la flèche V de la fig. 4.

La fig. 6 en est une vue en bout, de dessous, suivant la flèche VI de la fig. 4, et

La fig. 7 est une vue en élévation d'une variante de pivot dentaire.

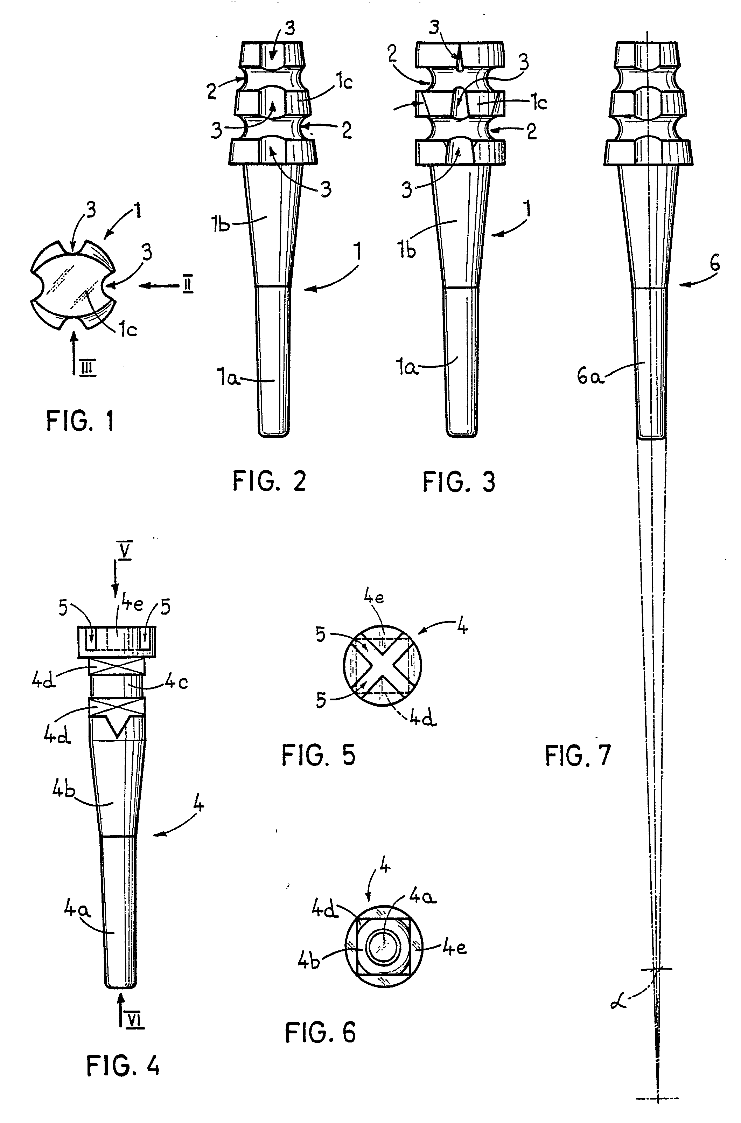

Le pivot dentaire représenté aux figs. 1 à 3, désigné d'une façon générale par 1, comprend une tige présentant une partie terminale ou apicale cylindrique 1a suivie d'une partie cervicale tronconique 1b, qui se prolonge par une tête 1c, en étages, de section droite non circulaire, allongée, en l'occurrence elliptique. Cette tête sert à la reconstitution, en composite ou en amalgame, d'un moignon destiné à recevoir une couronne dentaire, alors que la tige 1a-1b est destinée à être engagée et scellée dans un puits foré dans la racine de la dent naturelle.

La tête 1c étant de section non circulaire, elle correspond mieux à la forme de la dent naturelle à remplacer qu'une tête de section circulaire. De plus, la tige 1a-1b étant entièrement lisse, dépourvue de filet, la tête 1c pourra être orientée dans la direction appropriée en fonction de l'arc dentaire.

Il résulte de l'ensemble de ces dispositions que les retouches à la meule du moignon reconstitué sont réduites au minimum. La forme à étages ou à lamelles de la tête 1c, les lamelles étant séparées les unes des autres par des gorges 2 et présentant en outre chacune des encoches 3 disposées à 90° les unes des autres, améliore la rétention du matériau de reconstitution.

De plus, la forme particulière de la tige 1a-1b, selon laquelle sa partie cervicale 1b est conique alors que sa partie apicale 1a est cylindrique, présente l'avantage de s'adapter parfaitement à l'anatomie du canal radiculaire, après préparation endodontique. La partie apicale cylindrique 1a est très rétentive alors que la partie cervicale conique 1b offre une base robuste à la reconstitution, prenant un solide appui sur la racine naturelle,

Dans la forme d'exécution des figs. 4 à 6, le pivot dentaire, désigné d'une façon générale par 4, présente une tige dont la partie terminale ou apicale, désignée par 4a, est cylindrique, la partie cervicale étant tronconique en 4b et cylindrique en 4c. La partie 4c est intercalée entre deux tronçons de section carrée 4d. La tige se prolonge enfin par une tête 4e de section droite circulaire. Cette tête présente, sur sa face axiale, deux gorges croisées 5 destinées à améliorer la tenue du moignon reconstitué recevant la couronne dentaire.

La tête 4e étant plus petite que la tête 1c de la première forme d'exécution du pivot, le pivot de la deuxième forme d'exécution servira à la reconstitution partielle de couronnes, notamment d'amalgames.

Cette tête étant circulaire, le pivot pourra être placé sur la racine naturelle dans toute position angulaire, de sorte que sa tige, principalement la partie 4a de celle-ci, pourra être filetée si besoin. Les carrés 4d offriront alors une prise à un outil permettant d'entraîner le pivot en rotation.

La variante de la fig. 7 diffère de la première forme d'exécution par le fait que le pivot, désigné d'une façon générale par 6, a sa partie apicale, désignée par 6a, qui n'est pas cylindrique mais très légèrement conique, l'ouverture du cône, représentée par l'angle α de la fig. 7, étant de 3°, ce qui est un maximum.

La valeur de cet angle pourra varier, dans le cas où la partie apicale n'est pas cylindrique comme dans les deux formes d'exécution des figs. 1 à 6, et se situer entre 0,5° et 3°.

Quant au reste, le pivot 6 est identique à celui de la première forme d'exécution des figs. 1 à 3.

Le pivot dentaire objet de la présente invention pourra être réalisé en titane, en acier inoxydable, en platine, en platine et or coulés ou en tous autres alliages. Ses dimensions en longueur et en diamètre, de même que la forme de la section de sa tête pourront être diverses.

**Revendications**

1. Pivot dentaire comprenant une tige munie d'une tête, caractérisé par le fait que ladite tige est formée de deux parties, l'une, cervicale, étant au moins en partie tronconique, et l'autre, apicale, étant cylindrique ou tronconique avec une ouverture de cône inférieure ou égale à 3°.

2. Pivot dentaire suivant la revendication 1, caractérisé par le fait que ladite tige est lisse sur toute sa longueur.

3. Pivot dentaire suivant la revendication 1, caractérisé par le fait que ladite tête est de section droite circulaire.

4. Pivot dentaire suivant la revendication 2, caractérisé par le fait que ladite tête est de section droite non circulaire.

5. Pivot dentaire suivant la revendication 4, caractérisé par le fait que ladite tête est de section droite elliptique.

6. Pivot dentaire suivant la revendication 1, caractérisé par le fait que la forme tronconique de la partie cervicale de ladite tige se prolonge jusqu'à ladite tête.

7. Pivot dentaire suivant la revendication 1, caractérisé par le fait que ladite tige présente, à sa naissance, au moins une partie de section polygonale servant de prise à un outil permettant de la faire tourner, la partie apicale de ladite tige étant filetée.

FIG. 1

FIG. 2

FIG. 3

FIG. 7

FIG. 5

FIG. 4

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| X | DE-U-8 302 958  (GEBR. BRASSELER)<br>* page 5, ligne 20 - page 6, ligne 9; figure 2 *<br>--- | 1,3,6 | A 61 C   13/30 |
| X | DE-C-  844 341  (SCHWEIZER)<br>* page 2, lignes 56-60; figure 6 *<br>--- | 1-3,6 | |
| A | DE-A-2 936 690  (VAJDA)<br>* page 8, lignes 14-20; figure 1 *<br>--- | 1,2,4 | |
| A | US-A-1 397 067  (WILLIAMS)<br>* page 2, lignes 1-33; figures 1-4 *<br>--- | 1,4,5 | |
| A | FR-A-2 557 449  (MUSIKANT et al.)<br>* page 4, lignes 5-15; figures 1,2 *<br>----- | 1,7 | |

**DOMAINES TECHNIQUES RECHERCHES (Int. Cl.3)**

A 61 C    5/00
A 61 C   13/00

Le présent rapport a été établi pour toutes les revendications

| Lieu de la recherche | Date d'achèvement de la recherche | Examinateur |
|---|---|---|
| BERLIN | 28-11-1988 | SIMON J J P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................................
& : membre de la même famille, document correspondant

EPO FORM 1503 03.82 (P0402)